# FASCICULE DE BREVET EUROPEEN

(11) **EP 0 885 836 B1**
(45) Date de publication et mention de la délivrance du brevet: **02.01.2003**
(21) Numéro de dépôt: 98401338.3
(22) Date de dépôt: 05.06.1998
(51) Int. Cl.: B66F 9/075, B62D 33/06, B60J 1/18

(54) **Chariot à mât télescopique**
Hublader mit einem Teleskopmast
Lift truck with a telescopic mast

(30) Priorité: 09.06.1997 FR 9707096
(43) Date de publication de la demande: 23.12.1998
(73) Titulaire: Toyota Industrial Equipment SA, 44150 Ancenis (FR)
(72) Inventeur: Cottineau, Jean c/o Toyota Industrial Equipment SA, 44152 Ancenis Cedex (FR)
(74) Mandataire: Kaspar, Jean-Georges

(56) Documents cités:
- DE-A- 2 219 972
- DE-A- 3 608 313
- DE-U- 9 104 258
- DE-U- 9 313 053
- DE-U- 29 608 575
- US-A- 4 221 274
- US-A- 4 312 418
- US-A- 4 518 195
- "Spring assisted up and over window lift" RESEARCH DISCLOSURE, no. 110, juin 1973, page 177 XP002056058

## Description

L'invention est relative à un chariot à mât télescopique, du type comportant un châssis automoteur à quatre roues, ledit châssis portant une cabine contenant un poste de conduite et un groupe motopropulseur, ledit groupe motopropulseur étant protégé par un capot portant le siège du conducteur et ledit capot étant rabattable vers l'arrière à partir d'une position de fermeture du capot protégeant le groupe motopropulseur jusqu'à une position d'ouverture du capot donnant accès au groupe motopropulseur.

On connaît des chariots automoteurs à mât télescopique de ce type, dans lesquels la cabine présente à l'arrière une surface vitrée comportant une partie supérieure fixe portant un essuie-glace et une partie inférieure coulissante apte à être relevée vers le haut. Pour permettre l'ouverture du capot de protection du groupe motopropulseur, on fait coulisser la partie inférieure vers le haut par une opération analogue à l'ouverture d'une fenêtre à guillotine, on déplace le siège de conducteur dans une position prédéterminée pour permettre le passage à travers l'ouverture inférieure et on relève le capot du conducteur. Il est ainsi nécessaire au conducteur de déplacer son siège pour permettre l'ouverture du capot du groupe motopropulseur. En outre, ce chariot de type connu présente également les inconvénients suivants : la surface arrière nettoyée par l'essuie-glace fixé en partie supérieure est inférieure au quart de la surface totale vitrée, et le passage correspondant à l'ouverture inférieure interdit d'installer des sièges avec appui-tête ou dossier surélevé.

L'invention a pour but de remédier aux inconvénients précités, en fournissant un nouveau chariot à mât télescopique avec une visibilité arrière améliorée et une possibilité d'accès au groupe motopropulseur sans nécessiter de déplacement du siège du conducteur.

L'invention a pour objet un chariot à mât télescopique, du type comportant un châssis automoteur à roues, ledit châssis portant une cabine contenant un poste de conduite et un groupe motopropulseur, ledit groupe motopropulseur étant protégé par un capot portant le siège du conducteur, ledit capot étant rabattable vers l'arrière à partir d'une position de fermeture du capot protégeant le groupe motopropulseur jusqu'à une position d'ouverture du capot donnant accès au groupe motopropulseur, le siège du conducteur passant à travers une ouverture arrière de la cabine dans ladite position d'ouverture du capot, caractérisé en ce que la cabine comporte un hayon arrière relevable vers le haut et déplaçable de manière à escamoter la majeure partie du hayon à l'intérieur de la cabine, l'extrémité inférieure du hayon étant guidée selon un mouvement de translation, tandis que la partie supérieure du hayon décrit un mouvement de pivotement au cours de l'ouverture, pour atteindre une position ouverte de la cabine, correspondant à un passage libre du siège du conducteur monté sur le capot à travers l'ouverture ainsi dégagée par le déplacement du hayon.

Selon d'autres caractéristiques de l'invention :
- Le hayon comporte une surface vitrée contenue dans un cadre et agencée de manière que la surface vitrée soit contenue entièrement dans la cabine au cours du mouvement du hayon.
- La surface vitrée est sensiblement carrée et porte un essuie-glace de longueur voisine de la longueur du côté de ladite surface vitrée.
- Le hayon arrière relevable porte en partie inférieure deux roulettes ou galets de guidage coopérant avec des glissières au cours du mouvement du hayon.
- Le hayon est monté sur au moins un moyen formant bielle d'articulation et commandé par un actionneur; l'actionneur de commande du déplacement du hayon est de préférence un vérin pneumatique ou "vérin à gaz".
- L'actionneur est monté précontraint en position de fermeture du hayon, de manière à appliquer le hayon contre le bord de la cabine pour assurer l'étanchéité de la cabine.
- Le hayon porte un joint périphérique d'étanchéité.
- Le joint périphérique d'étanchéité est adjacent au côté supérieur et aux deux côtés latéraux du cadre entourant la surface vitrée et est positionné en bout de la partie inférieure du hayon.

L'invention sera mieux comprise grâce à la description qui va suivre donnée à titre d'exemple non limitatif en référence aux dessins annexés dans lesquels:

La figure 1 représente schématiquement une vue en élévation latérale avec arrachement partiel d'un chariot selon l'invention en position fermée de la cabine.

La figure 2 représente schématiquement une vue en élévation latérale avec arrachement partiel d'un chariot selon l'invention en position ouverte de la cabine, avec basculement du capot de protection du groupe motopropulseur vers l'arrière.

La figure 3 représente schématiquement une vue agrandie en coupe par un plan médian longitudinal d'une cabine de chariot selon l'invention, illustrant la cinématique d'un mouvement de hayon.

La figure 4 représente une vue partielle en perspective arrière d'un chariot selon l'invention.

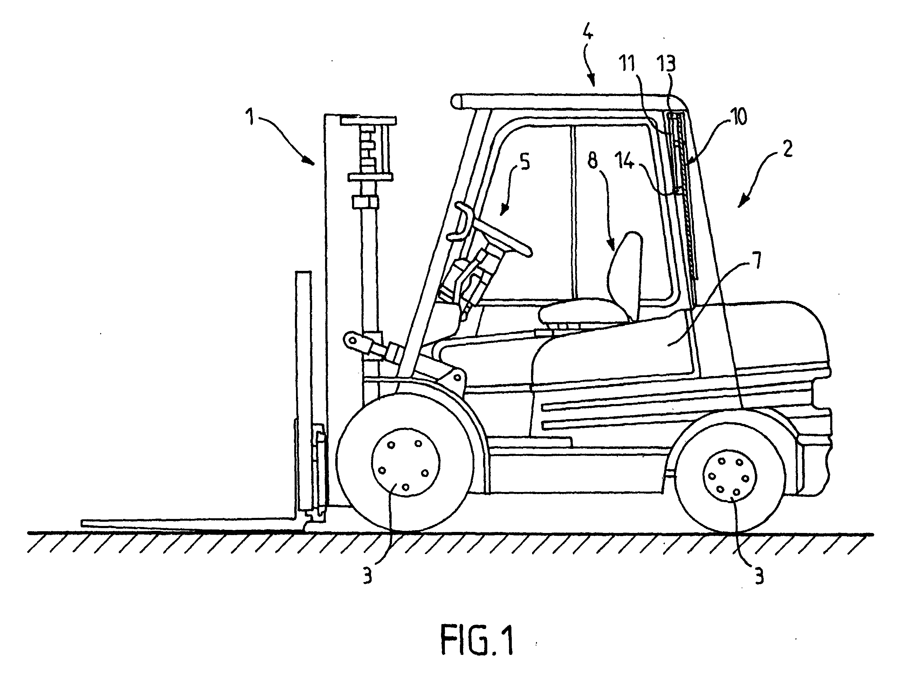

En référence aux figures 1 à 4, les chiffres de référence identiques désignent des éléments identiques ou fonctionnellement équivalents.

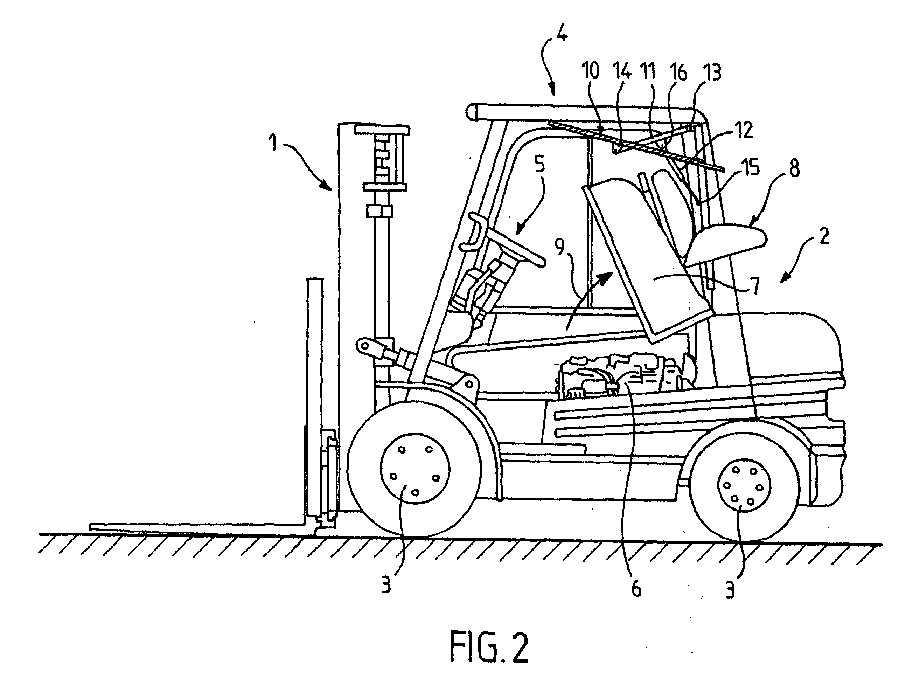

Sur les figures 1 et 2, le chariot selon l'invention comporte un mât télescopique 1 portant des fourches de chargement. Le mât télescopique 1 est monté solidaire et inclinable par rapport à un châssis 2 automoteur à quatre roues 3. Le châssis 2 porte une cabine 4 contenant un poste de conduite 5 et un groupe motopropulseur 6. Le groupe motopropulseur 6 est protégé par un capot 7 portant le siège 8 du conducteur.

On entend par groupe motopropulseur tout moyen de création d'énergie mécanique ou hydraulique propre à transmettre un mouvement aux roues et à actionner les actionneurs et éléments de préhension de l'ensemble du mât télescopique 1, notamment les groupes motopropulseurs comprenant un moteur thermique et les groupes motopropulseurs à fonctionnement électrique alimentés par batteries.

Sur la figure 1, le capot 7 est dans une position de fermeture protégeant le groupe motopropulseur 6 et le siège 8 du conducteur monté sur le capot 7 est dans une position correspondant à la conduite du chariot par un opérateur.

Sur la figure 2, le capot est rabattu vers l'arrière jusqu'à une position d'ouverture du capot donnant accès au groupe motopropulseur. Dans cette position d'ouverture du capot dans le sens de la flèche 9, le siège 8 du conducteur monté sur le capot 7 passe librement à travers une ouverture arrière de la cabine 4.

A cet effet, selon l'invention, la cabine 4 comporte un hayon arrière 10 relevable vers le haut et déplaçable entre la position fermée de la cabine correspondant à la figure 1 et la position ouverte de la cabine correspondant à la figure 2.

Dans la position ouverte de la cabine 4, la majeure partie du hayon 10 est escamotée à l'intérieur de la cabine, ce qui présente l'avantage de protéger la surface extérieure du hayon 10 des chocs et des projections indésirables.

Pour commander le déplacement du hayon et en assurer l'ouverture automatique à partir d'une position entrouverte, le hayon 10 est monté sur un moyen 11 formant bielle d'articulation et commandé par un actionneur 12. La bielle 11 est articulée en 13 au coin supérieur arrière de la cabine et en 14 sur une patte solidaire du hayon.

L'actionneur 12 est articulé en 15 sur la structure de la cabine 4 et en 16 sur une patte solidaire de la bielle 11.

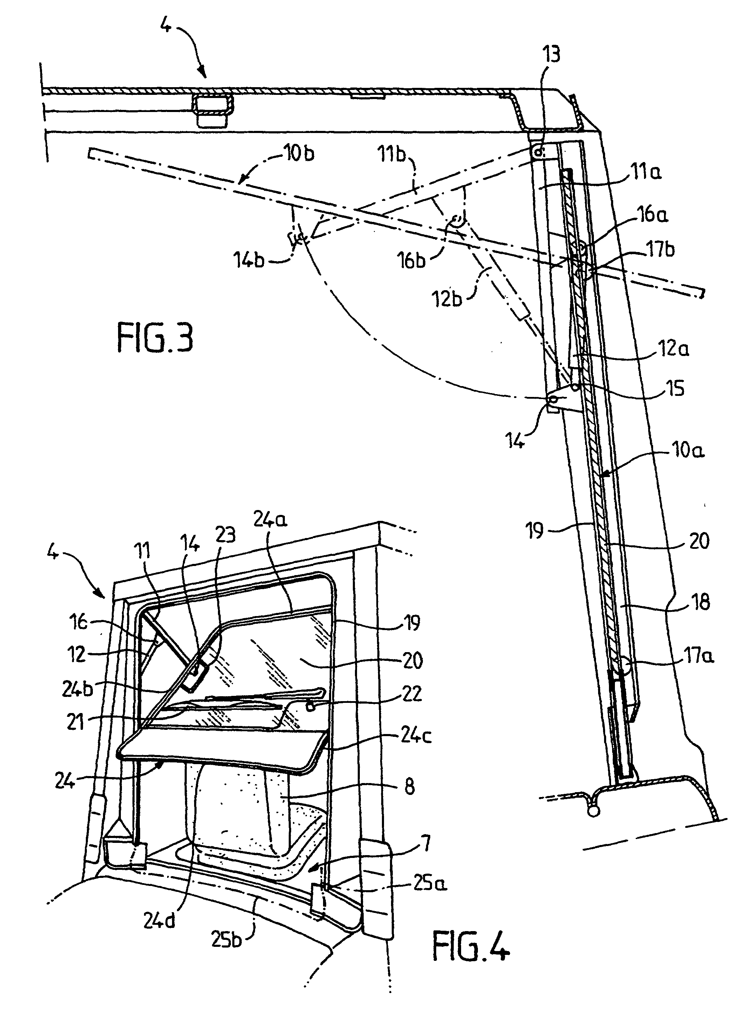

Sur la figure 3, le hayon 10a est représenté en position fermée de la cabine, et est appliqué contre le bord de la cabine 4 par l'actionneur 12a. A cet effet, l'actionneur 12a est monté précontraint dans la position de fermeture du hayon 10a de manière à empêcher toute ouverture intempestive du hayon 10a et à assurer l'étanchéité arrière de la cabine 4.

Dans la position représentée en traits interrompus, le hayon 10b est représenté en position ouverte de la cabine 4, et l'actionneur 12b est détendu à sa longueur maximale pour relever la bielle 11b vers le haut.

Le hayon 10 porte de préférence en partie inférieure deux roulettes 17 ou galets de guidage aptes à se déplacer dans des glissières 18 solidaires de la cabine 4 au cours du mouvement du hayon. L'extrémité inférieure du hayon est ainsi guidée selon un mouvement de translation, tandis que la partie supérieure du hayon décrit un mouvement de pivotement au cours de l'ouverture. De préférence, les roulettes 17 sont fixées dans une partie de transition correspondant à la prolongation d'un cadre 19 contenant une surface vitrée 20. Le déplacement du hayon 10 s'effectue de manière que la surface vitrée 20 soit entièrement contenue dans la cabine 4 au cours du mouvement du hayon 10.

Dans la position fermée de la cabine, les roulettes 17 sont dans la position 17a tandis que, dans la position ouverte de la cabine, les roulettes 17 sont dans la position 17b.

Sur la figure 4, la surface vitrée 20 est sensiblement carrée et porte un essuie-glace 21 monté en 22 dans le coin inférieur droit de la surface vitrée 20. La longueur de l'essuie-glace 21 est voisine de la longueur du côté de la surface vitrée 20. Pour débloquer le hayon 10 en début d'ouverture et permettre le déploiement automatique de l'actionneur 12, on prévoit avantageusement une poignée de traction 23 et on utilise de préférence comme actionneur 12 un vérin pneumatique ou " vérin à gaz " qui se déploie automatiquement après déblocage du hayon 10.

On prévait avantageusement de munir le hayon 10 d'un joint d'étanchéité 24. Le joint d'étanchéité 24 est un joint périphérique qui est adjacent en 24a au côté supérieur du cadre 19 entourant la surface vitrée, adjacent en 24b aux deux côtés latéraux du cadre 19 entourant la surface vitrée 20 et qui s'étend ensuite intérieurement en 24c sur le prolongement métallique du cadre 19 et est ensuite positionné en 24d en bout de la partie inférieure du hayon 10. De cette manière, l'étanchéité en partie inférieure est réalisée sur le côté extérieur de la cabine en position inférieure sur la trace en traits interrompus 25a, et sur la surface horizontale du châssis 2 automoteur sur la trace en traits interrompus 25b.

Le fait de réaliser l'étanchéité intérieurement à la cabine en partie supérieure et extérieurement à la cabine en partie inférieure assure une parfaite étanchéité et élimine tout frottement nuisible au déblocage du hayon 10 au moyen de la poignée de traction 23.

L'invention décrite en référence à un mode de réalisation particulier n'y est nullement limitée mais couvre au contraire toute modification de forme et toute variante de réalisation dans le cadre et l'esprit de l'invention comme défini dans les revendications.

## Revendications

1. Chariot à mât télescopique (1), du type comportant un châssis (2) automoteur à roues (3), ledit châssis (2) portant une cabine (4) contenant un poste de conduite (5) et un groupe motopropulseur (6), ledit groupe motopropulseur (6) étant protégé par un capot (7) portant le siège (8) du conducteur, ledit capot (7) étant rabattable vers l'arrière à partir d'une position de fermeture du capot (7) protégeant le groupe motopropulseur (6) jusqu'à une position d'ouverture du capot (7) donnant accès au groupe motopropulseur, le siège (8) du conducteur passant à travers une ouverture arrière de la cabine (4) dans ladite position d'ouverture du capot (7), **caractérisé en ce que** la cabine (4) comporte un hayon arrière (10) relevable vers le haut et déplaçable de manière à escamoter la majeure partie du hayon (10) à l'intérieur de la cabine, l'extrémité inférieure du hayon étant guidée selon un mouvement de translation, tandis que la partie supérieure du hayon décrit un mouvement de pivotement au cours de l'ouverture, pour atteindre une position ouverte de la cabine (4), correspondant à un passage libre du siège (8) du conducteur monté sur le capot (7) à travers l'ouverture ainsi dégagée par le déplacement du hayon (10).

2. Chariot selon la revendication 1, **caractérisé en ce que** le hayon (10) comporte une surface vitrée (20) contenue dans un cadre (19) et agencée de manière que la surface vitrée (20) soit contenue entièrement dans la cabine (4) au cours du mouvement du hayon (10).

3. Chariot selon la revendication 2, **caractérisé en ce que** la surface vitrée (20) est sensiblement carrée et porte un essuie-glace (21) de longueur voisine de la longueur du côté de ladite surface vitrée (20).

4. Chariot selon la revendication 1, **caractérisé en ce que** le hayon arrière (10) relevable porte en partie inférieure deux roulettes ou galets de guidage (17) coopérant avec des glissières (18) au cours du mouvement du hayon.

5. Chariot selon la revendication 1, **caractérisé en ce que** le hayon (10) est monté sur au moins un moyen (11) formant bielle d'articulation et commandé par un actionneur (12).

6. Chariot selon la revendication 5, **caractérisé en ce que** l'actionneur (12) de commande du déplacement du hayon (10) est de préférence un vérin pneumatique ou "vérin à gaz".

7. Chariot selon la revendication 5 ou la revendication 6, **caractérisé en ce que** l'actionneur (12) est monté précontraint en position de fermeture du hayon (10), de manière à appliquer le hayon (10) contre le bord de la cabine (4) pour assurer l'étanchéité de la cabine (4).

8. Chariot selon la revendication 1, **caractérisé en ce que** le hayon (10) porte un joint périphérique d'étanchéité (24).

9. Chariot selon la revendication 2 et la revendication 8, **caractérisé en ce que** le joint périphérique (24) d'étanchéité est adjacent au côté supérieur et aux deux côtés latéraux du cadre (19) entourant la surface vitrée (20) et est positionné en bout de la partie inférieure du hayon (10).

## Patentansprüche

1. Hublader mit einem Teleskopmast (1) des Typs mit einem mit Rädern (3) versehenen, selbstfahrenden Fahrgestells (2), wobei das Fahrgestell (2) eine Kabine (4) und darin einen Führerstand (5) sowie eine Antriebsgruppe (6) aufweist, die durch eine einen Fahrersitz 8 tragende Haube (7) geschützt ist, die sich aus einer geschlossenen Stellung, in der sie die Antriebsgruppe (6) abschließt, nach rückwärts in eine geöffnete Stellung klappen lässt, in der die Antriebsgruppe (6) zugänglich ist, wobei der Fahrersitz (8) in der geöffneten Stellung der Haube (7) durch eine hintere Öffnung der Kabine (4) hinausragt, **dadurch gekennzeichnet, dass** die Kabine (4) eine nach oben anhebbare Heckklappe (10) aufweist, die derart beweglich ist, dass der größte Teil der Heckklappe (10) im Inneren der Kabine verschwindet, wobei das untere Ende der Heckklappe in einer Translationsbewegung geführt ist, während der obere Teil der Heckklappe beim Öffnen eine Kippbewegung vollzieht, um eine geöffnete Stellung der Kabine (4) zu erreichen, die einem freien Durchgang des auf der Haube (7) angeordneten Fahrersitzes (8) durch die aufgrund der Bewegung der Heckklappe (10) freigegebene Öffnung hindurch entspricht.

2. Hublader nach Anspruch 1, **dadurch gekennzeichnet, dass** die Heckklappe (10) eine in einem Rahmen (19) gehaltene Glasscheibe (20) aufweist, die so angeordnet ist, dass sich die Glasscheibe (20) bei der Bewegung der Heckklappe (10) vollständig innerhalb der Kabine (4) befindet.

3. Hublader nach Anspruch 2, **dadurch gekennzeichnet, dass** die Glasscheibe (2) im wesentlichen quadratisch ist und einen Scheibenwischer (21) mit einer Länge, die im wesentlichen der Länge einer Seite der Glasscheibe (20) entspricht, trägt.

4. Hublader nach Anspruch 1, **dadurch gekennzeichnet, dass** die anhebbare Heckklappe (10) an ihrem unteren Teil zwei Führungsrollen (17), die mit Führungsschienen (18) bei der Bewegung der Heckklappe zusammenwirken, trägt.

5. Hublader nach Anspruch 1, **dadurch gekennzeichnet, dass** die Heckklappe (10) an wenigstens einer einen Lenker bildenden Einrichtung (11) angeordnet ist und sich durch ein Betätigungselement (12) betätigen lässt.

6. Hublader nach Anspruch 5, **dadurch gekennzeichnet, dass** das Betätigungselement (12) zum Bewegen der Heckklappe (10) vorzugsweise eine pneumatische Kolben-Zylinder-Einheit oder eine "Gasfeder" ist.

7. Hublader nach Anspruch 5 oder Anspruch 6, **dadurch gekennzeichnet, dass** das Betätigungselement (12) in der geschlossenen Stellung der Heckklappe (10) mit Vorspannung angeordnet ist, so dass die Heckklappe (10) gegen die Kante der Kabine (4) gepresst wird, um die Dichtheit der Kabine (4) zu gewährleisten.

8. Hublader nach Anspruch 1, **dadurch gekennzeichnet, dass** die Heckklappe (10) eine umlaufende Dichtung (24) trägt.

9. Hublader nach Anspruch 2 und Anspruch 8, **dadurch gekennzeichnet, dass** die umlaufende Dichtung (24) benachbart zur oberen Seite und zu den beiden seitlichen Seiten des Rahmens (19), die Glasscheibe (20) umfassend, angeordnet ist und am Ende des unteren Teils der Heckklappe (10) positioniert ist.

## Claims

1. A lift truck with a telescopic mast (1), of the type comprising a self-propelled chassis (2) provided with wheels (3), the said chassis (2) carrying a cab (4) containing a driver' position (5) and a power unit (6), the said power unit (6) being protected by a hood (7) carrying the driver's seat (8), the said hood (7) being tiltable rearwards from a closed position of the hood (7), in which it protects the power unit (6), until reaching an open position of the hood (7) providing access to the power unit, the driver's seat (8) passing through a rear opening of the cab (4) in the said open position of the hood (7), **characterised in that** the cab (4) comprises a tailgate (10) liftable upwards and displaceable so that the majority of the tailgate (10) is retractable inside the cab, the lower end of the tailgate being translationally guided, while the upper portion of the tailgate executes a pivoting movement during opening, into an open position of the cab (4) in which the driver's seat (8) mounted on the hood (7) passes freely through the opening thus freed by the displacement of the tailgate (10).

2. A lift truck according to claim 1, **characterised in that** the tailgate (10) comprises a glazed surface (20) held in a frame (19) and arranged so that the glazed surface (20) is contained entirely within the cab (4) during the movement of the tailgate (10).

3. A lift truck according to claim 2, **characterised in that** the glazed surface (20) is substantially square and carries a windscreen wiper (21) of a length approximately the length of the edge of the said glazed surface (20).

4. A lift truck according to claim 1, **characterised in that** the liftable tailgate (10) carries in its lower portion two guide rollers or wheels (17) co-operating with slides (18) during the movement of the tailgate.

5. A lift truck according to claim 1, **characterised in that** the tailgate (10) is mounted on at least one means (11) forming an articulation rod and controlled by an actuator (12).

6. A lift truck according to claim 5, **characterised in that** the actuator (12) for controlling the displacement of the tailgate (10) is preferably a pneumatic cylinder or "gas cylinder".

7. A lift truck according to claim 5 or claim 6, **characterised in that** the actuator (12) is mounted so as to be prestressed when the tailgate (10) is in a closed position so as to push the tailgate (10) against the edge of the cab (4) to ensure that the cab (4) is sealed.

8. A lift truck according to claim 1, **characterised in that** the tailgate (10) carries a peripheral sealing ring (24).

9. A lift truck according to claim 2 and claim 8, **characterised in that** the peripheral sealing ring (24) is adjacent to the upper edge and the two lateral edges of the frame (19) surrounding the glazed surface (20) and is positioned at the end of the lower portion of the tailgate (10).
